# EUROPEAN PATENT SPECIFICATION

(11) **EP 4 400 470 B1**
(45) Date of publication and mention of the grant of the patent: **04.02.2026**
(21) Application number: 23219555.2
(22) Date of filing: 21.12.2023
(51) Int. Cl.: B66C 23/80

(54) **VEHICLE**
FAHRZEUG
VÉHICULE

(30) Priority: 05.01.2023 GB 202300144
(43) Date of publication of application: 17.07.2024
(73) Proprietor: Mac's Truck Sales Limited, Huddersfield West Yorkshire HD3 3ZA (GB)
(72) Inventor: HALL, Andrew, Huddersfield, West Yorkshire HD3 3ZA (GB)
(74) Representative: Appleyard Lees IP LLP

(56) References cited:
- GB-A- 2 599 755
- US-A- 1 920 216
- US-B1- 10 456 610

## Description

The present disclosure relates to a vehicle.

In particular the present disclosure relates to a vehicle with a stability system.

### Background

Some vehicles carry lifting equipment, for example a crane or cradle for lifting loads or people. It is common to fit these vehicles with a stability system to inhibit the vehicle from becoming unsteady (e.g. falling over) if the lifting equipment moves a load to an extended position, for example out to one side of the vehicle. Such stability systems may include legs (for example hydraulic rams) which extend from the sides of the vehicle.

A vehicle that comprises a stability system that increases the load bearing capability and/or lifting distance capability of lifting equipment fitted to the vehicle is highly desirable. GB2599755A discloses a vehicle according to the preamble of claim 1.

### Summary

According to the present disclosure there is provided an apparatus as set forth in the appended claims. Other features of the invention will be apparent from the dependent claims, and the description which follows.

There is provided a vehicle (100) comprising a first end region (102) and a second end region (104), the first end region (102) spaced apart from the second end region (104) along an x-axis of the vehicle (100). The vehicle (100) extends along a y-axis, a first side (106) of the vehicle (100) and a second side (108) of the vehicle (100) spaced apart from one another along the y-axis. The x-axis is at right angles to the y-axis;

The vehicle (100) extends along a z-axis, a top side (120) of the vehicle (100) and a bottom side (122) of the vehicle (100) spaced apart from one another along the z-axis. The z-axis is perpendicular to the x-axis and y-axis.

The vehicle comprises a chassis (500) extending along the x-axis, a first end (506) of the chassis (500) and a second end (508) of the chassis (500) spaced apart from one another along the x-axis. The first end region (102) of the vehicle (100) comprises a first body shell unit (200) comprising an end wall section (202) which defines a first end (110) of the vehicle (100). The first body shell unit (200) further defines a drive unit compartment (204). A stability system module (300) is mounted within the drive unit compartment (204). The stability system module (300) comprises a vehicle mount (600) for coupling the stability system module (300) to the chassis (500). The vehicle mount (600) has a body section (602) which defines a first support hub (604). The stability system module (300) further comprises a first support leg (400) having a first mount portion (402) and a first foot end (404). The first support leg (400) extends from the first mount portion (402) to the first foot end (404). The first mount portion (402) is located within the first support hub (604) of the vehicle mount (600). The first support leg (400) is operable to have a loaded configuration in which the first foot end (404) is engaged with a support surface (800) beneath the vehicle (100) and an unloaded configuration in which the first foot end (404) is spaced apart from the support surface (800) beneath the vehicle (100).

The body section (602) of the vehicle mount (600) may define a second support hub (606) spaced apart from the first support hub (604) along the y-axis. The stability system module (300) may comprise a second support leg (1400) having a second mount portion (1402) and a second foot end (1404). The second support leg (1400) may extend from the second mount portion (1402) to the second foot end (1404). The second mount portion (1402) may be located within the second support hub (606) of the vehicle mount (600). The second support leg (1400) may be operable to have a loaded configuration in which the second foot end (1404) is engaged with the support surface (800) beneath the vehicle (100) and an unloaded configuration in which the second foot end (1404) is spaced apart from the support surface (800) beneath the vehicle (100).

The second end region (104) of the vehicle (100), stability system module (300) and the end wall section (202) of the first body shell unit (200) may be provided in series along the x-axis of the vehicle (100). The stability system module (300) may be provided between the second end region (104) and the end wall section (202) of the first body shell unit (200).

A drive unit (900) may be located in the drive unit compartment (204). The drive unit (900), vehicle mount (600) and the end wall section (202) of the first body shell unit (200) may be provided in series along the x-axis of the vehicle (100). The vehicle mount (600) may be provided between the drive unit (900) and the end wall section (202) of the first body shell unit (200).

The first end region (102) of the vehicle (100) may further comprise a second body shell unit (220) which defines a driver cabin (224). The second body shell unit (220) may be located above the first body shell unit (200) in the z-axis.

The first end (506) of the chassis (500) may comprise a first chassis rail (502) which extends along the x-axis at least part of the way through the drive unit compartment (204) towards the end wall section (202) such that the first chassis rail (502) is located in the drive unit compartment (204). The body section (602) of the vehicle mount (600) may be coupled to the first chassis rail (502) of the chassis (500).

The first end (506) of the chassis (500) may comprise a second chassis rail (504) which extends along the x-axis at least part of the way through the drive unit compartment (204) towards the end wall section (202) such that the second chassis rail (504) is located in the drive unit compartment (204). The second chassis rail (504) may be spaced apart from the first chassis rail (502) in the y-axis, and the body section (602) of the vehicle mount (600) may be coupled to the second chassis rail (504) of the chassis (500).

The body section (602) of the vehicle mount (600) may extend in the y-axis of the vehicle (100). A first flange (610) may extend from the body section (602), the first flange (610) comprising a first section (612) which is offset from the body section (602) and which extends in the y-axis of the vehicle (100). The first flange (610) may be configured for coupling with the first chassis rail (502).

The body section (602) of the vehicle mount (600) may comprise a second flange (620) which extends from the body section (602), the second flange (620) comprising a second section (622) which is offset from the body section (602) and which extends in the y-axis of the vehicle (100). The second flange (620) may be configured for coupling with the second chassis rail (504).

The first end (506) of the chassis (500) may further comprise a lateral support member (700) located in the drive unit compartment (204). The lateral support member (700) may extend along the y-axis across the drive unit compartment (204).

The body section (602) of the vehicle mount (600) may be coupled to the lateral support member (700) of the chassis (500).

The vehicle mount (600) may comprise a first extension member (630) which extends from the body section (602). The first extension member (630) may be coupled to the lateral support member (700) of the chassis (500).

The vehicle mount (600) may comprise a first bracket (640) which extends between the first extension member (630) and the lateral support member (700) of the chassis (500).

The vehicle mount (600) may comprise a second extension member (632) which extends from the body section (602). The second extension member (632) may be coupled to the lateral support member (700) of the chassis (500). The second extension member (632) may be spaced apart from the first extension member (630) in the y-axis.

The vehicle mount (600) may comprise a second bracket (642) which extends between the second extension member (632) and the lateral support member (700) of the chassis (500). The second bracket (642) may be spaced apart from the first bracket (640) in the y-axis.

The end wall section (202) may be provided with a first cover section (230). The stability system module (300) may be provided adjacent to the first cover section (230).

The vehicle (100) may be a tractor unit (130) for towing a trailer (132). The vehicle (100) may be a tractor unit (130) of a fixed bed truck (134).

Hence there is provided a vehicle that comprises a stability system that increases the load bearing capability and/or lifting distance capability of lifting equipment fitted to the vehicle.

### Brief Description of the Drawings

Examples of the present disclosure will now be described with reference to the accompanying drawings, in which:
Figure 1 shows a plan view of a vehicle comprising a stability system according to the present disclosure;
Figure 2 shows an underside view of the vehicle shown in figure 1;
Figure 3 is an end internal view of the vehicle shown in figures 1, 2 with a stability system module shown in an unloaded configuration;
Figure 4 shows the end internal view of the vehicle shown in figure 3 with the stability system module shown in a loaded configuration;
Figure 5 shows an enlarged view of a section of the underside view of the vehicle shown in figure 3;
Figure 6 shows an assembly view of a vehicle mount of the stability system according to the present disclosure;
Figure 7 shows an exploded view of the vehicle mount shown in figure 6; and
Figure 8 shows an internal side view of the vehicle shown in figures 1, 2.

### Detailed Description

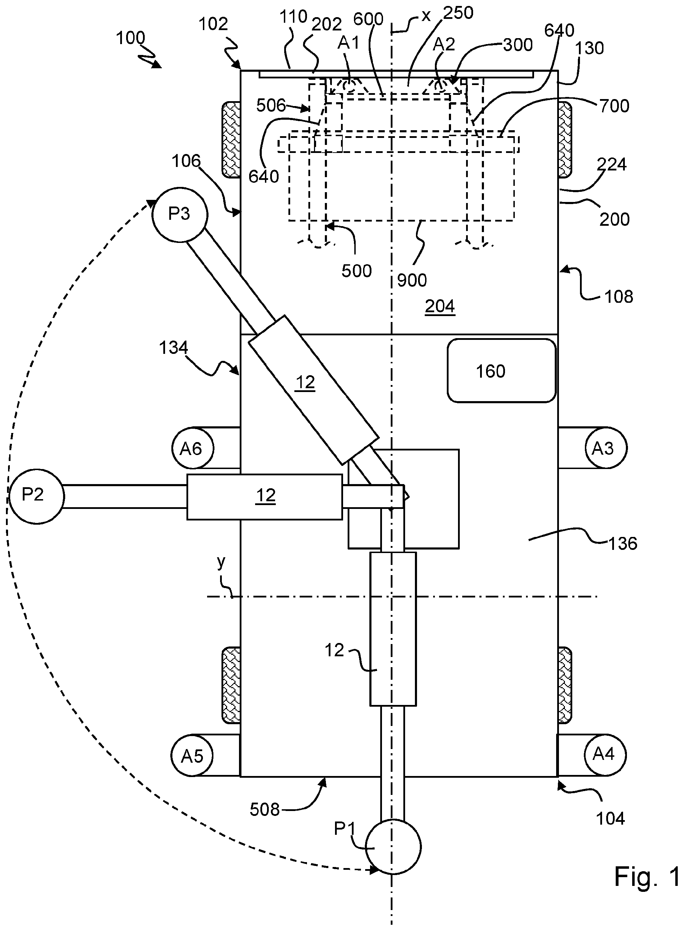

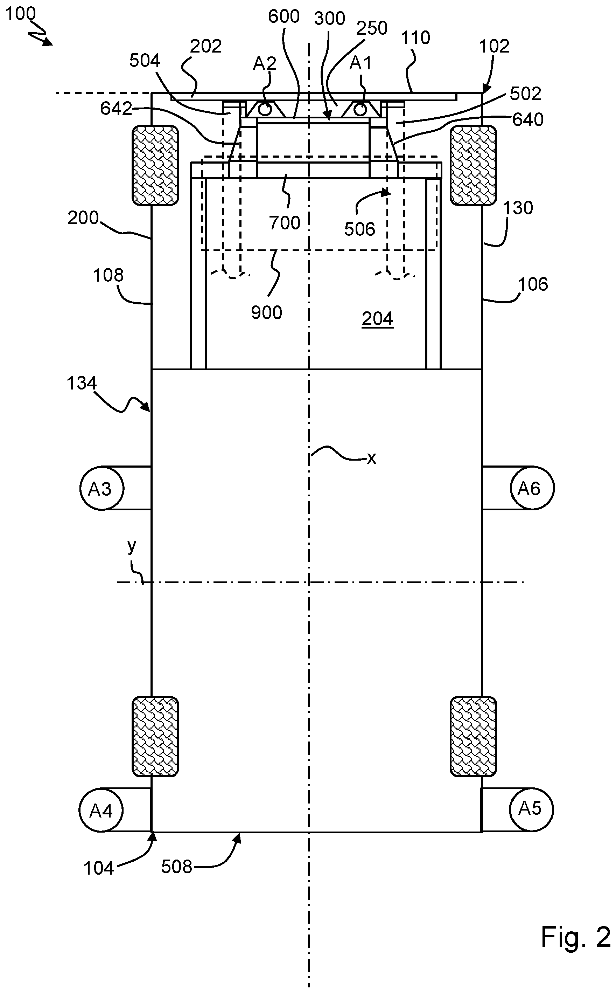

Figures 1, 2 illustrate a vehicle 100 according to the present disclosure which carries lifting equipment 12 (e.g. a crane with an extendible arm, mounted on a base which is pivotable about a vertical (z) axis) and is fitted with a stability system which includes a stability system module 300. The vehicle 100 may be a tractor unit 130 for towing a trailer or (as shown in the figures) a fixed bed truck 134 with a tractor unit 130.

The stability system may comprise a number of actuator units, labelled A1 to A6, which each comprise a support leg 400, 1400 that is actuated by its respective actuator unit A1 to A6. By way of a non-limiting example, two actuator units, labelled as A1 and A2, of the stability system module 300 are located at the front of the vehicle 100 (e.g. beneath a cab of the vehicle 100, where a driver would operate the vehicle 100). The further actuator units A3 to A6 of the rest of the stability system are provided on sides 106, 108 of the vehicle 100.

For the avoidance of doubt, the features of the stability system module 300 of the present disclosure may be fitted in a different number, arrangement, location and combination to that shown in the figures. The figures merely show an example to provide context so the reader may understand how the stability system module 300 may be reduced to practice in a non-limiting example with a vehicle 100 fitted with lifting apparatus 12. The vehicle 100 may be a truck or other wheeled vehicle 100, or trailer, or any other platform which requires adjustable stability. The vehicle 100 has tyres/wheels 32 which sit on a supporting surface 800 (e.g. the ground, a substrate).

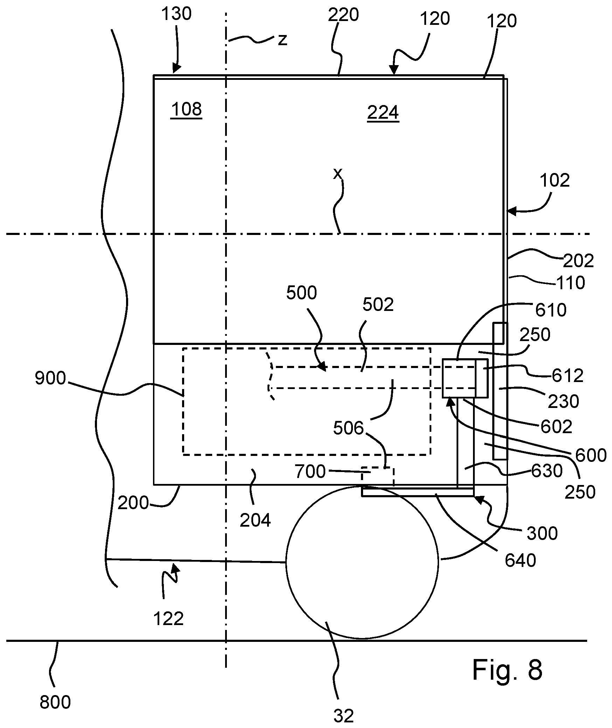

As shown in figures 1, 2 the vehicle 100 comprises a first end region 102 which defines the front end of the vehicle 100 (e.g. typically where the driver's cabin 224 and the engine may be located) and a second end region 104 (e.g. typically the rear end of the vehicle, which may be a flatbed support platform 136). The first end region 102 is spaced apart from the second end region 104 along an x-axis (i.e. the longitudinal axis, the length direction) of the vehicle 100. The vehicle 100 extends along a y-axis (i.e. transverse or width direction), a first side 106 of the vehicle 100 and a second side 108 of the vehicle 100 spaced apart from one another along the y-axis. The x-axis is at right angles to the y-axis. As shown in figure 8, the vehicle 100 extends along a z-axis (i.e. the height direction), a top side 120 of the vehicle 100 and a bottom side 122 of the vehicle 100 spaced apart from one another along the z-axis. The z-axis is perpendicular to the x-axis and y-axis.

By way of non-limiting example, the stability system module 300 will be described with reference to actuator units A1 and A2 located at the front of the vehicle 100.

With reference to figure 1, in an example manoeuvre, the lifting equipment 12 (for example including a crane on an arm) is operable to move a load from position 1 (**P1**) at the rear 104 of the vehicle 100, in an arc around to position 2 (**P2**) over one side 106 of the vehicle 100, and then on to position 3 (**P3**) towards the front 102 of, and overhanging, the vehicle 100. During this manoeuvre the load on the support legs 400, 1400 of actuator units A1, A5 and A6 will be increased relative to the support legs 400, 1400 of actuator units A2, A3, A4.

The vehicle comprises a chassis 500 which extends along the x-axis, a first end 506 of the chassis 500 and a second end 508 of the chassis 500 spaced apart from one another along the x-axis. Only detail of the first end of the chassis 500 is shown in the figures, the second end 508 being hidden by other features of the vehicle 100. The chassis 500 may extend along the y-axis. That is to say, and as shown in figures 1, 2, 5, there may be provided members (e.g. rails) which make up the chassis 500 towards the first side 106 of the vehicle and towards the second side 108 of the vehicle 100, spaced apart from one another along the y-axis (i.e. across the width of the vehicle).

The first end region 102 of the vehicle 100 may comprise a first body shell unit 200 comprising side wall sections (i.e. the first side 106 and second side 108) and an end wall section 202. As shown in figures 1, 2, 5, 8, the end wall section 202 may define a first end 110 of the vehicle 100. Also as shown in figures 1, 2, 5, 8, the first body shell unit 200 may further define a drive unit compartment 204.

As shown in figure 8, the first end region 102 of the vehicle 100 may further comprise a second body shell unit 220 which defines a driver cabin 224. In the example shown, the second body shell unit 220 is located above the first body shell unit 200. (That is to say, the second body shell unit 220 is located above the first body shell unit 200 in the z-axis direction). The second body shell unit 220 may be mounted on springs (or the like) on the chassis 500 such that it is moveable relative to the first body shell unit 200 (for example to provide shock absorption).

As shown in figures 1, 2, 5, 8 the stability system module 300 may be mounted (i.e. provided, located) within the drive unit compartment 204. Hence the stability system module 300 may be shielded (e.g. enclosed) by the first body shell unit 200. The first body shell unit 200 may be open on the bottom side 122, at least in part, for the support legs 400, 1400 of the actuators to extend therethrough. Hence apertures 240 may be provided in the first body shell unit 200 for the support legs 400, 1400 to extend through.

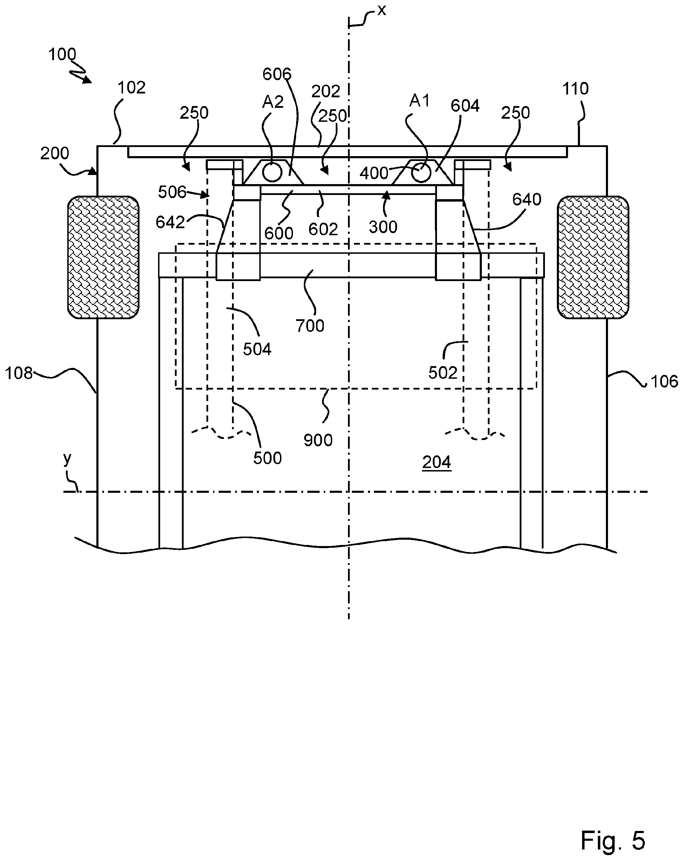

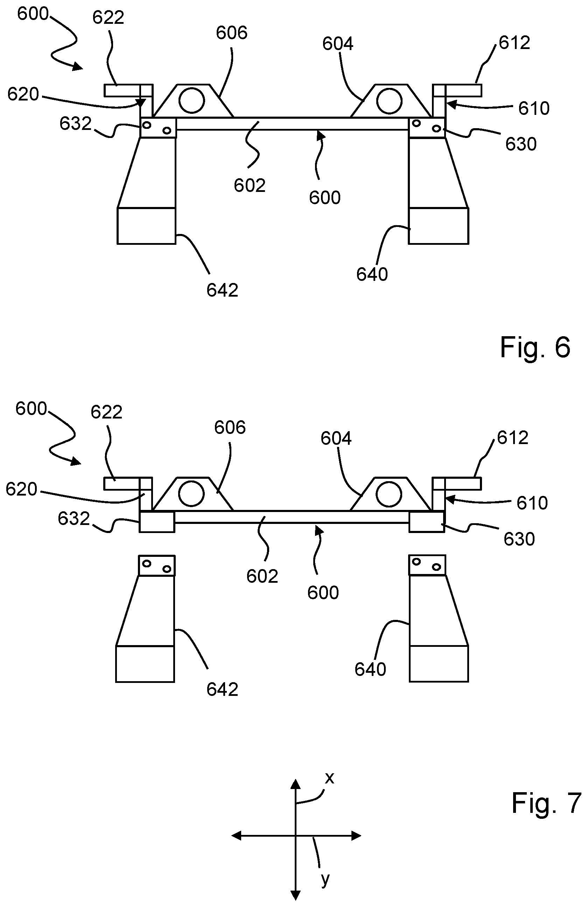

As shown in the figures, the stability system module 300 may comprise a vehicle mount 600 for coupling the stability system module 300 to the chassis 500. As best shown in figures 5 to 7 the vehicle mount 600 may have a body section 602 which defines a first support hub 604. The body section 602 of the vehicle mount 600 may define a second support hub 606 spaced apart from the first support hub 604 (e.g. along the y-axis of the vehicle, when fitted to the vehicle 100). The body section 602 of the vehicle mount 600 may be elongate, and (when fitted to the vehicle) extend in the y-axis of the vehicle 100. The vehicle mount 600 may be located in a cavity 250 defined between the drive unit 900 and the end wall section 202 of the first body shell unit 200. The vehicle mount 600 may be provided adjacent to the first cover section 230.

The second end region 104, stability system module 300 and the end wall section 202 of the first body shell unit 200 may be provided in series along the x-axis of the vehicle 100. The stability system module 300 may be provided between the second end region 104 and the end wall section 202 of the first body shell unit 200.

A drive unit 900 may, at least in part, be located in the drive unit compartment 204 (indicated by a dashed/broken line in figures 1, 2, 5, 8). The drive unit 900 may be a combustion engine (for example fuelled by petrol, diesel or hydrogen), a fuel cell, an electric motor or other device operable to drive the vehicle 100 and/or power equipment and/or systems (for example the lifting equipment and/or the stability system) on the vehicle 100.

The drive unit 900, stability system module 300 and the end wall section 202 of the first body shell unit 200 may be provided in series along the x-axis of the vehicle 100. The stability system module 300 may be provided between the drive unit 900 and the end wall section 202 of the first body shell unit 200. The stability system module 300 may be provided adjacent to the drive unit 900. The stability system module 300 may be provided adjacent to the drive unit 900 and adjacent to the end wall section 202 of the first body shell unit 200.

The drive unit 900, vehicle mount 600 and the end wall section 202 of the first body shell unit 200 may be provided in series along the x-axis of the vehicle 100. The vehicle mount 600 may be provided between the drive unit 900 and the end wall section 202 of the first body shell unit 200. The vehicle mount 600 may be provided adjacent to the drive unit 900. The vehicle mount 600 may be provided adjacent to the drive unit 900 and adjacent to the end wall section 202 of the first body shell unit 200.

The drive unit 900, the body section 602 of the vehicle mount 600 and the end wall section 202 of the first body shell unit 200 may be provided in series along the x-axis of the vehicle 100. The body section 602 of the vehicle mount 600 may be provided between the drive unit 900 and the end wall section 202 of the first body shell unit 200. The body section 602 of the vehicle mount 600 may be provided adjacent to the drive unit 900. The body section 602 of the vehicle mount 600 may be provided adjacent to the drive unit 900 and adjacent to the end wall section 202 of the first body shell unit 200.

The end wall section 202 may be provided with a first cover section 230 (for example a grill and/or openable door panel). The stability system module 300 may be provided adjacent the first cover section 230. The body section 602 of the vehicle mount 600 may be provided adjacent the first cover section 230.

As best shown in figures 1, 2, 5, 8, the first end 506 of the chassis 500 may comprise a first chassis rail 502 which extends along the x-axis at least part of the way through the drive unit compartment 204 towards the end wall section 202. Hence the first chassis rail 502 is located in the drive unit compartment 204. The body section 602 of the vehicle mount 600 is coupled to the first chassis rail 502 of the chassis 500. The first chassis rail 502 may extend through and/or past the drive unit 900. That is to say, the first chassis rail 502 may extend from the rear of the vehicle 100, through and/or past the drive unit 900, and extend into the cavity 250 defined between the drive unit 900 and the end wall section 202 of the first body shell unit 200.

The first end 506 of the chassis 500 may comprise a second chassis rail 504 which extends along the x-axis at least part of the way through the drive unit compartment 204 towards the end wall section 202. Hence the second chassis rail 504 is located in the drive unit compartment 204. The second chassis rail 504 may be spaced apart from the first chassis rail 502 in the y-axis. The body section 602 of the vehicle mount 600 is coupled to the second chassis rail 504 of the chassis 500. That is to say, the second chassis rail 504 may extend from the rear of the vehicle 100, through and/or past the drive unit 900, and extend into the cavity 250 defined between the drive unit 900 and the end wall section 202 of the first body shell unit 200.

A first flange 610 may extend from the body section 602 of the vehicle mount 600, the first flange 610 comprising a first section 612 which is offset from the body section 602 and which (when fitted to the vehicle 100) extends in the y-axis of the vehicle 100. The first flange 610 may be configured for coupling with the first chassis rail 502. The first section 612 may be offset from the body section 602 in the x-axis.

The body section 602 of the vehicle mount 600 may further comprise a second flange 620 which extends from the body section 602, the second flange 620 comprising a second section 622 which is offset from the body section 602 and which (when fitted to the vehicle 100) extends in the y-axis of the vehicle 100. The second flange 620 may be configured for coupling with the second chassis rail 504. The second section 622 may be offset from the body section 602 in the x-axis.

Hence when the vehicle mount 600 is fitted to the vehicle 100, the second flange 620 extends in the y-axis of the vehicle 100 in the opposite direction to the first flange 610. That is to say, the first section 612 may extend towards the first side 106 of the vehicle 100, and the second section 622 may extend towards the second side 108 of the vehicle.

Hence the first flange 610 and first section 612, and the second flange 620 and second section 622, are configured so the body section 602 of the vehicle mount 600 may be located between the first chassis rail 502 and second chassis rail 504, offset (i.e. set back from) the ends of the first chassis rail 502 and second chassis rail 504, to locate the vehicle mount 600 as far back as possible (or desired) from the end wall section 202 of the first body shell unit 200. That is, the body section 602 of the vehicle mount 600 may be offset from the ends of the first chassis rail 502 and the second chassis rail 504 (when fitted to the vehicle 100) in the x-axis direction away from the end wall section 202 of the first body shell unit 200.

The first flange 610 and the second flange 620 may extend in the same plane. That is to say, the first section 612 of the first flange 610 may extend in the same plane as the second section 622 of the second flange 620, and the first section 612 of the first flange 610 may be aligned with the second section 622 of the second flange 620.

Since the first chassis rail 502 and second chassis rail 504 extend in the longitudinal direction of the vehicle 100, they are configured to provide vertical support to the vehicle mount 600. That is to say, coupling the vehicle mount 600 to the first chassis rail 502 and second chassis rail 504 inhibits the vehicle mount 600 from moving up and down in the z-axis.

As best shown in figures 1, 2, 5, 8, the first end 506 of the chassis 500 may further comprise a lateral support member 700 located in the drive unit compartment 204. The lateral support member 700 may extend along the y-axis across the drive unit compartment 204. That is to say, the lateral support member 700 may extend at right angles to the first chassis rail 502 and second chassis rail 504, for example between the first side 106 and second side 108 of the vehicle 100.

The body section 602 of the vehicle mount 600 may be coupled to the lateral support member 700 of the chassis 500. Since the lateral support member 700 extends in the y-axis, it provides lateral support to the vehicle mount 600. That is to say, coupling the vehicle mount 600 to the lateral support member 700 inhibits the vehicle mount 600 from moving from side to side in the y-direction.

As best shown in figure 8, the vehicle mount 600 may comprise a first extension member 630 which extends from the body section 602 (for example in the direction of the z-axis, downwards). The first extension member 630 may be coupled to the lateral support member 700 of the chassis 500. That is to say, the body section 602 of the vehicle mount 600 may be coupled to the lateral support member 700 of the chassis 500 via the first extension member 630.

As best shown in figures 1, 2, 5, 8, the vehicle mount 600 may comprise a first bracket 640 which extends between the first extension member 630 and the lateral support member 700 of the chassis 500 to couple them together. That is to say, the body section 602 of the vehicle mount 600 may be coupled to the lateral support member 700 of the chassis 500 via the first extension member 630 and the first bracket 640.

The vehicle mount 600 may comprise a second extension member 632 which extends from the body section 602 (for example in the direction of the z-axis, downwards). The second extension member 632 may be spaced apart from the first extension member 630 in the y-axis (i.e. when fitted to the vehicle 100). The second extension member 632 may be coupled to the lateral support member 700 of the chassis 500. That is to say, the body section 602 of the vehicle mount 600 may be coupled to the lateral support member 700 of the chassis 500 via the second extension member 632.

The vehicle mount 600 may comprise a second bracket 642 which extends between the second extension member 632 and the lateral support member 700 of the chassis 500 to couple them together, the second bracket 642 being spaced apart from the first bracket 640 in the y-axis (i.e. when fitted to the vehicle 100). That is to say, the body section 602 of the vehicle mount 600 may be coupled to the lateral support member 700 of the chassis 500 via the second extension member 632 and the second bracket 642.

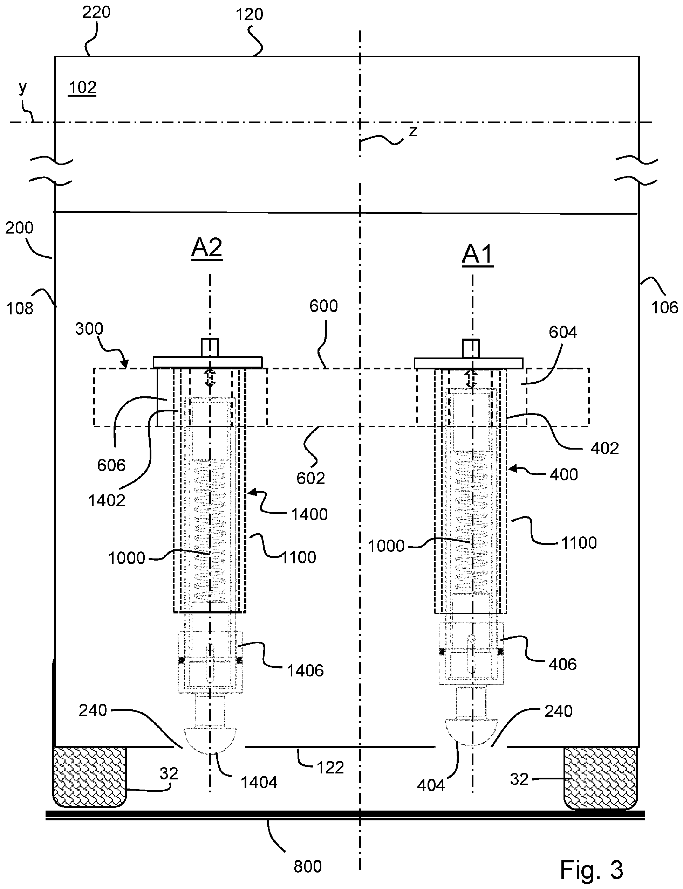

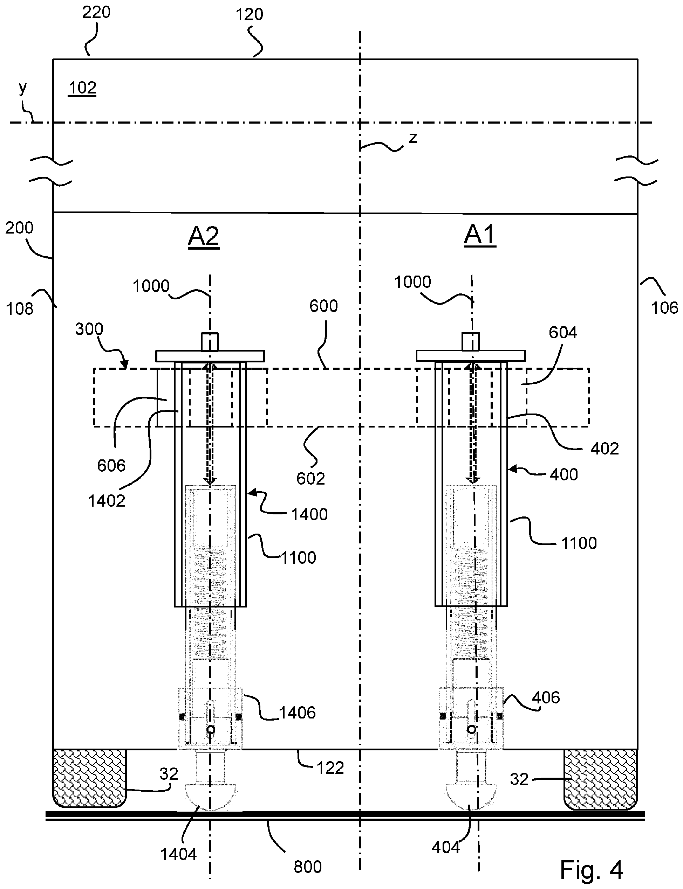

Figures 3, 4 show example actuator units A1, A2 which may form part of the stability system module 300. The actuator units A1, A2 may be identical. In some examples only a single actuator unit may be provided at the end of the vehicle. In other examples more than two actuator units may be provided at the end of the vehicle.

As shown in figures 3, 4, the actuator units A1, A2 may each be centred on a longitudinal axis 1000. Each longitudinal axis 1000 may extend in the z-axis. Each actuator unit A1, A2 may have a housing 1100 which forms part of a support leg 400, 1400. The or each support leg 400, 1400 comprises a foot unit 406, 1406. The or each actuator unit A1, A2 may be a hydraulic system, with the or each support leg 400, 1400 operable as a hydraulic ram.

As shown in figures 3, 4 each actuator unit A1, A2 may be mounted such that, in normal use, the housing 1100 is above the foot unit 406, 1406 (for example, vertically).

Hence, the stability system module 300 may comprise a first support leg 400 having a first mount portion 402 (e.g. the housing 1100) and a first foot end 404 defined by the foot unit 406. The first mount portion 402 (e.g. the housing 1100) may be located within the first support hub 604 of the vehicle mount 600. The first support leg 400 may extend from the first mount portion 402 to the first foot end 404. In the example shown, the first support leg 400 extends from the first mount portion 402 to the first foot end 404 along the z-axis.

Also in the example shown, the stability system module 300 comprises a second support leg 1400 having a second mount portion 1402 (e.g. the housing 1100) and a second foot end 1404 defined by the foot unit 1406. The second mount portion 1402 (e.g. the housing 1100) may be located within the second support hub 606 of the vehicle mount 600. The second support leg 1400 may extend from the second mount portion 1402 to the second foot end 1404. In the example shown, the second support leg 1400 extends from the second mount portion 1402 to the second foot end 1404 along the z-axis.

The first support leg 400 (and in examples where present, the second support leg 1400) may be operable to have a **loaded configuration** (as shown in figure 4) in which the foot end 404, 1404 is engaged with a support surface 800 beneath the vehicle 100 and an **unloaded configuration** (as shown in figure 3) in which the foot end 404, 1404 is spaced apart from the support surface 800 beneath the vehicle 100. That is to say, the support leg 400, 1400 may be operable to extend in length from a stowed configuration (as shown in figure 3, where the or each support leg 400, 1400 is at its shortest) with the foot end 404, 1404 spaced apart from the ground 800, to an extended configuration (as shown in figure 4, where the or each support leg is at its longest), with the foot end 404, 1404 in contact with the ground 800 and supporting the vehicle 100.

That is to say, the support leg 400, 1400 may be operable to extend from a stowed configuration (as shown in figure 3) with the foot end 404, 1404 spaced apart from the ground 800, to an extended configuration (as shown in figure 4) with the foot end 404, 1404 in contact with the ground 800 and supporting the vehicle 100.

Put another way, the foot end 404, 1404 may be moved upwards and downwards and may be stored within drive unit compartment 204. Hence when a lifting operation is in progress (for example as illustrated in figure 1) the or each support leg 400, 1400 of the stability system module 300 may be deployed to be in contact with the ground 800 (i.e. set to be in the **loaded configuration** as shown in figure 4) so as to prevent the vehicle from tipping and so that the load at the front 102 of the vehicle is taken by the or each support leg 400, 1400 rather than the vehicle's wheels 32 and associated suspension. When the extra support of the or each support leg 400, 1400 is not required (for example during transit or normal parking) then the or each support leg 400, 1400 may be retracted to the **unloaded (e.g. stowed) configuration** (as shown in figure 3).

In use, a stability system module 300 configured as herein described may be operated in conjunction with other systems on a vehicle 100. For example, the stability system module 300 may feed information to, and receive information from, a control unit 160.

Hence there is provided a vehicle with a stability system module 300 which is contained within the body shell (i.e. outer envelope) of the vehicle. Providing the stability system module 300 within the body shell unit 200 means that the mounting points of the vehicle mount 600 to the chassis rails 502, 504 are as far into the cavity 250 as possible, which means that the load bearing capacity of the rails 502, 504 is maximised. Also, provision of the flanges 610, 620 enable the vehicle mount 600 to be located as far into the drive unit compartment 204 as possible so that the brackets 640, 642 may be as short as possible, which means that the load bearing capacity of the brackets 640, 642 is maximised. Hence this increases the load that can be safely supported by the rails 502, 504 and brackets 640, 642, and thus increases the load that can be safely supported by the actuators A1, A2 mounted to the vehicle mount 600. Hence for a vehicle with lifting equipment, for example as shown in figure 1, the arrangement of the present disclosure allows the crane to lift loads closer to the maximum lifting capacity and/or with a greater crane arm extension compared to examples of the related art. Thus a vehicle with a stability system module 300 mounted according to the present disclosure may remain stable over a wider range of load shifting manoeuvres compared to an example of the related art.

Without such a configuration, lifting equipment attached to the vehicle may need to draw in the load it carries closer to the vehicle in certain manoeuvres, adding steps to, and slowing down, the lifting process. If the load is large and heavy this may mean that there is not enough space for the load to be drawn in close to the vehicle without it colliding with the vehicle, and the vehicle 100 may need to be repositioned to deliver the load.

Put another way, a vehicle 100 with a stability system module 300 mounted according to the present disclosure enables the vehicle to perform lifting operations more quickly and with less potential re-positioning than an example of the related art, and hence will be inherently more fuel efficient.

Additionally, a vehicle 100 with a stability system module 300 of the present disclosure, which is contained within the body shell, is also advantageous because the mounting of a stability system module 300 in this way avoids an increase in length of the vehicle, which avoids the risk of breaching regulations on vehicle size.

Locating the stability system module 300 within the body shell of the vehicle 100 also means the aerodynamics of the vehicle are not affected.

## Claims

1. A vehicle (100) comprising a first end region (102) and a second end region (104), the first end region (102) spaced apart from the second end region (104) along an x-axis of the vehicle (100); the vehicle (100) extending along a y-axis, a first side (106) of the vehicle (100) and a second side (108) of the vehicle (100) spaced apart from one another along the y-axis; the x-axis being at right angles to the y-axis; and the vehicle (100) extending along a z-axis, a top side (120) of the vehicle (100) and a bottom side (122) of the vehicle (100) spaced apart from one another along the z-axis; the z-axis being perpendicular to the x-axis and y-axis;
the vehicle comprising a chassis (500) extending along the x-axis, a first end (506) of the chassis (500) and a second end (508) of the chassis (500) spaced apart from one another along the x-axis;
the first end region (102) of the vehicle (100) comprising:
a first body shell unit (200) comprising an end wall section (202) which defines a first end (110) of the vehicle (100);
the first body shell unit (200) further defining a drive unit compartment (204);
a stability system module (300),
wherein the stability system module (300) comprises a vehicle mount (600) for coupling the stability system module (300) to the chassis (500), the vehicle mount (600) having a body section (602) which defines a first support hub (604); and
the stability system module (300) further comprises a first support leg (400) having a first mount portion (402) and a first foot end (404); the first support leg (400) extending along the z-axis from the first mount portion (402) to the first foot end (404);
and the first mount portion (402) being located within the first support hub (604) of the vehicle mount (600);
the first support leg (400) being operable to have a **loaded configuration** in which the first foot end (404) is engaged with a support surface (800) beneath the vehicle (100) and an **unloaded configuration** in which the first foot end (404) is spaced apart from the support surface (800) beneath the vehicle (100), the first support leg (400) being operable to extend in length along the z-axis from the **unloaded configuration** to the **loaded** configuration; **characterized in that**, the stability system module (300) is mounted within the drive unit compartment (204).

2. A vehicle (100) as claimed in claim 1 wherein the body section (602) of the vehicle mount (600) defines a second support hub (606) spaced apart from the first support hub (604) along the y-axis, and
the stability system module (300) comprises a second support leg (1400) having a second mount portion (1402) and a second foot end (1404); the second support leg (1400) extending along the z-axis from the second mount portion (1402) to the second foot end (1404); and the second mount portion (1402) being located within the second support hub (606) of the vehicle mount (600),
the second support leg (1400) being operable to have a **loaded configuration** in which the second foot end (1404) is engaged with the support surface (800) beneath the vehicle (100) and an **unloaded configuration** in which the second foot end (1404) is spaced apart from the support surface (800) beneath the vehicle (100) , the second support leg (1400) being operable to extend in length along the z-axis from the **unloaded configuration** to the **loaded configuration.**

3. A vehicle (100) as claimed in claim 1 or claim 2 wherein the second end region (104) of the vehicle (100), stability system module (300) and the end wall section (202) of the first body shell unit (200) are provided in series along the x-axis of the vehicle (100), the stability system module (300) being provided between the second end region (104) and the end wall section (202) of the first body shell unit (200).

4. A vehicle (100) as claimed in any one of the preceding claims wherein a drive unit (900) is located in the drive unit compartment (204); and the drive unit (900), vehicle mount (600) and the end wall section (202) of the first body shell unit (200) are provided in series along the x-axis of the vehicle (100), the vehicle mount (600) being provided between the drive unit (900) and the end wall section (202) of the first body shell unit (200).

5. A vehicle (100) as claimed in any one of the preceding claims wherein the first end region (102) of the vehicle (100) further comprises:
a second body shell unit (220) which defines a driver cabin (224);
the second body shell unit (220) being located above the first body shell unit (200) in the z-axis.

6. A vehicle (100) as claimed in any one of the preceding claims wherein the first end (506) of the chassis (500) comprises a first chassis rail (502) which extends along the x-axis at least part of the way through the drive unit compartment (204) towards the end wall section (202) such that the first chassis rail (502) is located in the drive unit compartment (204), and the body section (602) of the vehicle mount (600) is coupled to the first chassis rail (502) of the chassis (500).

7. A vehicle (100) as claimed in claim 6 wherein the first end (506) of the chassis (500) comprises a second chassis rail (504) which extends along the x-axis at least part of the way through the drive unit compartment (204) towards the end wall section (202) such that the second chassis rail (504) is located in the drive unit compartment (204); the second chassis rail (504) being spaced apart from the first chassis rail (502) in the y-axis, and the body section (602) of the vehicle mount (600) is coupled to the second chassis rail (504) of the chassis (500).

8. A vehicle (100) as claimed in any one of the preceding claims wherein the body section (602) of the vehicle mount (600) extends in the y-axis of the vehicle (100); and
a first flange (610) extends from the body section (602), the first flange (610) comprising a first section (612) which is offset from the body section (602) and which extends in the y-axis of the vehicle (100); the first flange (610) being configured for coupling with the first chassis rail (502).

9. A vehicle (100) as claimed in claim 8 wherein the body section (602) of the vehicle mount (600) comprises a second flange (620) which extends from the body section (602), the second flange (620) comprising a second section (622) which is offset from the body section (602) and which extends in the y-axis of the vehicle (100); the second flange (620) being configured for coupling with the second chassis rail (504).

10. A vehicle (100) as claimed in any one of the preceding claims wherein the first end (506) of the chassis (500) further comprises a lateral support member (700) located in the drive unit compartment (204), the lateral support member (700) extending along the y-axis across the drive unit compartment (204).

11. A vehicle (100) as claimed in claim 10 wherein the body section (602) of the vehicle mount (600) is coupled to the lateral support member (700) of the chassis (500).

12. A vehicle (100) as claimed in claim 11 wherein the vehicle mount (600) comprises a first extension member (630) which extends from the body section (602); the first extension member (630) being coupled to the lateral support member (700) of the chassis (500); and.
the vehicle mount (600) comprises a second extension member (632) which extends from the body section (602); the second extension member (632) being coupled to the lateral support member (700) of the chassis (500), the second extension member (632) being spaced apart from the first extension member (630) in the y-axis.

13. A vehicle (100) as claimed in claim 12 wherein the vehicle mount (600) comprises a first bracket (640) which extends between the first extension member (630) and the lateral support member (700) of the chassis (500); and.
the vehicle mount (600) comprises a second bracket (642) which extends between the second extension member (632) and the lateral support member (700) of the chassis (500), the second bracket (642) being spaced apart from the first bracket (640) in the y-axis.

14. A vehicle (100) as claimed in any one of the preceding claims wherein the end wall section (202) is provided with a first cover section (230); the stability system module (300) being provided adjacent to the first cover section (230).

15. A vehicle (100) as claimed in any one of the preceding claims wherein the vehicle (100) is a tractor unit (130) for towing a trailer (132) or a tractor unit (130) of a fixed bed truck (134).

## Patentansprüche

1. Fahrzeug (100), das einen ersten Endbereich (102) und einen zweiten Endbereich (104) umfasst, wobei der erste Endbereich (102) von dem zweiten Endbereich (104) entlang einer x-Achse des Fahrzeugs (100) beabstandet ist; wobei sich das Fahrzeug (100) entlang einer y-Achse erstreckt, wobei eine erste Seite (106) des Fahrzeugs (100) und eine zweite Seite (108) des Fahrzeugs (100) entlang der y-Achse beabstandet sind; wobei die x-Achse rechtwinklig zur y-Achse ist und sich das Fahrzeug (100) entlang einer z-Achse, erstreckt wobei eine Oberseite (120) des Fahrzeugs (100) und eine Unterseite (122) des Fahrzeugs (100) entlang der z-Achse voneinander beabstandet sind; wobei die z-Achse senkrecht zu der x-Achse und der y-Achse ist;
wobei das Fahrzeug ein Chassis (500) umfasst, das sich entlang der x-Achse erstreckt, wobei ein erstes Ende (506) des Chassis (500) und ein zweites Ende (508) des Chassis (500) entlang der x-Achse voneinander beabstandet sind;
wobei der erste Endbereich (102) des Fahrzeugs (100) Folgendes umfasst:
eine erste Karosserieschaleneinheit (200), die einen Endwandabschnitt (202) umfasst, der ein erstes Ende (110) des Fahrzeugs (100) definiert;
wobei die erste Karosserieschaleneinheit (200) ferner ein Antriebseinheitsfach (204) definiert;
ein Stabilitätssystemmodul (300),
wobei das Stabilitätssystemmodul (300) eine Fahrzeughalterung (600) zum Koppeln des Stabilitätssystemmoduls (300) mit dem Chassis (500) umfasst, wobei die Fahrzeughalterung (600) einen Karosserieabschnitt (602) aufweist, der eine erste Stütznabe (604) definiert; und das Stabilitätssystemmodul (300) ferner ein erstes Stützbein (400) mit einem ersten Montageabschnitt (402) und einem ersten Fußende (404) umfasst; wobei sich das erste Stützbein (400) entlang der z-Achse vom ersten Montageabschnitt (402) zum ersten Fußende (404) erstreckt und wobei sich der erste Montageabschnitt (402) innerhalb der ersten Stütznabe (604) der Fahrzeughalterung (600) befindet;
wobei das erste Stützbein (400) betreibbar ist, eine beladene Konfiguration, in der das erste Fußende (404) mit einer Stützfläche (800) unter dem Fahrzeug (100) in Eingriff steht, und eine unbeladene Konfiguration, in der das erste Fußende (404) von der Stützfläche (800) unter dem Fahrzeug (100) beabstandet ist, aufzuweisen, wobei das erste Stützbein (400) betreibbar ist, sich in der Länge entlang der z-Achse von der unbeladenen Konfiguration zu der beladenen Konfiguration zu erstrecken; **dadurch gekennzeichnet, dass** das Stabilitätssystemmodul (300) innerhalb des Antriebseinheitsfachs (204) montiert ist.

2. Fahrzeug (100) nach Anspruch 1, wobei der Karosserieabschnitt (602) der Fahrzeughalterung (600) eine zweite Stütznabe (606) definiert, die von der ersten Stütznabe (604) entlang der y-Achse beabstandet ist, und das Stabilitätssystemmodul (300) ein zweites Stützbein (1400) mit einem zweiten Montageabschnitt (1402) und einem zweiten Fußende (1404) umfasst; wobei sich das zweite Stützbein (1400) entlang der z-Achse von dem zweiten Montageabschnitt (1402) zu dem zweiten Fußende (1404) erstreckt und sich der zweite Montageabschnitt (1402) innerhalb der zweiten Stütznabe (606) der Fahrzeughalterung (600) befindet,
wobei das zweite Stützbein (1400) betreibbar ist, eine beladene Konfiguration, in der das zweite Fußende (1404) mit der Stützfläche (800) unter dem Fahrzeug (100) in Eingriff steht, und eine unbeladene Konfiguration, in der das zweite Fußende (1404) von der Stützfläche (800) unter dem Fahrzeug (100) beabstandet ist, aufzuweisen, wobei das zweite Stützbein (1400) betreibbar ist, sich in der Länge entlang der z-Achse von der unbeladenen Konfiguration zu der beladenen Konfiguration zu erstrecken.

3. Fahrzeug (100) nach Anspruch 1 oder Anspruch 2, wobei der zweite Endbereich (104) des Fahrzeugs (100), das Stabilitätssystemmodul (300) und der Endwandabschnitt (202) der ersten Karosserieschaleneinheit (200) in Reihe entlang der x-Achse des Fahrzeugs (100) vorgesehen sind, wobei das Stabilitätssystemmodul (300) zwischen dem zweiten Endbereich (104) und dem Endwandabschnitt (202) der ersten Karosserieschaleneinheit (200) vorgesehen ist.

4. Fahrzeug (100) nach einem der vorhergehenden Ansprüche, wobei sich eine Antriebseinheit (900) in dem Antriebseinheitsfach (204) befindet und die Antriebseinheit (900), die Fahrzeughalterung (600) und der Endwandabschnitt (202) der ersten Karosserieschaleneinheit (200) in Reihe entlang der x-Achse des Fahrzeugs (100) vorgesehen sind, wobei die Fahrzeughalterung (600) zwischen der Antriebseinheit (900) und dem Endwandabschnitt (202) der ersten Karosserieschaleneinheit (200) vorgesehen ist.

5. Fahrzeug (100) nach einem der vorhergehenden Ansprüche, wobei der erste Endbereich (102) des Fahrzeugs (100) ferner Folgendes umfasst:
eine zweite Karosserieschaleneinheit (220), die eine Fahrerkabine (224) definiert;
wobei sich die zweite Körperschaleneinheit (220) oberhalb der ersten Körperschaleneinheit (200) in der z-Achse befindet.

6. Fahrzeug (100) nach einem der vorhergehenden Ansprüche, wobei das erste Ende (506) des Chassis (500) eine erste Chassisschiene (502) umfasst, die sich entlang der x-Achse zumindest teilweise durch das Antriebseinheitsfach (204) in Richtung des Endwandabschnitts (202) erstreckt, sodass sich die erste Chassisschiene (502) in dem Antriebseinheitsfach (204) befindet und der Karosserieabschnitt (602) der Fahrzeughalterung (600) mit der ersten Chassisschiene (502) des Chassis (500) gekoppelt ist.

7. Fahrzeug (100) nach Anspruch 6, wobei das erste Ende (506) des Chassis (500) eine zweite Chassisschiene (504) umfasst, die sich entlang der x-Achse zumindest teilweise durch das Antriebseinheitsfach (204) in Richtung des Endwandabschnitts (202) erstreckt, so dass sich die zweite Chassisschiene (504) in dem Antriebseinheitsfach (204) befindet; wobei die zweite Chassisschiene (504) von der ersten Chassisschiene (502) in der y-Achse beabstandet ist und der Karosserieabschnitt (602) der Fahrzeughalterung (600) mit der zweiten Chassisschiene (504) des Chassis (500) gekoppelt ist.

8. Fahrzeug (100) nach einem der vorhergehenden Ansprüche, wobei sich der Karosserieabschnitt (602) der Fahrzeughalterung (600) in der y-Achse des Fahrzeugs (100) erstreckt und
sich ein erster Flansch (610) vom Karosserieabschnitt (602) erstreckt, wobei der erste Flansch (610) einen ersten Abschnitt (612) umfasst, der vom Karosserieabschnitt (602) versetzt ist und sich in der y-Achse des Fahrzeugs (100) erstreckt; wobei der erste Flansch (610) zum Koppeln mit der ersten Chassisschiene (502) ausgelegt ist.

9. Fahrzeug (100) nach Anspruch 8, wobei der Karosserieabschnitt (602) der Fahrzeughalterung (600) einen zweiten Flansch (620) umfasst, der sich vom Karosserieabschnitt (602) erstreckt, wobei der zweite Flansch (620) einen zweiten Abschnitt (622) umfasst, der vom Karosserieabschnitt (602) versetzt ist und sich in der y-Achse des Fahrzeugs (100) erstreckt; wobei der zweite Flansch (620) zum Koppeln mit der zweiten Chassisschiene (504) ausgelegt ist.

10. Fahrzeug (100) nach einem der vorhergehenden Ansprüche, wobei das erste Ende (506) des Chassis (500) ferner ein seitliches Stützelement (700) umfasst, das sich in dem Antriebseinheitsfach (204) befindet, wobei sich das seitliche Stützelement (700) entlang der y-Achse über das Antriebseinheitsfach (204) erstreckt.

11. Fahrzeug (100) nach Anspruch 10, wobei der Karosserieabschnitt (602) der Fahrzeughalterung (600) mit dem seitlichen Stützelement (700) des Chassis (500) gekoppelt ist.

12. Fahrzeug (100) nach Anspruch 11, wobei die Fahrzeughalterung (600) ein erstes Verlängerungselement (630) umfasst, das sich vom Karosserieabschnitt (602) erstreckt; wobei das erste Verlängerungselement (630) mit dem seitlichen Stützelement (700) des Chassis (500) gekoppelt ist; und
die Fahrzeughalterung (600) ein zweites Verlängerungselement (632) umfasst, das sich vom Karosserieabschnitt (602) erstreckt; wobei das zweite Verlängerungselement (632) mit dem seitlichen Stützelement (700) des Chassis (500) gekoppelt ist, wobei das zweite Verlängerungselement (632) von dem ersten Verlängerungselement (630) in der y-Achse beabstandet ist.

13. Fahrzeug (100) nach Anspruch 12, wobei die Fahrzeughalterung (600) einen ersten Träger (640) umfasst, der sich zwischen dem ersten Verlängerungselement (630) und dem seitlichen Stützelement (700) des Chassis (500) erstreckt; und
die Fahrzeughalterung (600) einen zweiten Träger (642) umfasst, der sich zwischen dem zweiten Verlängerungselement (632) und dem seitlichen Stützelement (700) des Chassis (500) erstreckt, wobei der zweite Träger (642) in der y-Achse vom ersten Träger (640) beabstandet ist.

14. Fahrzeug (100) nach einem der vorhergehenden Ansprüche, wobei der Endwandabschnitt (202) mit einem ersten Abdeckungsabschnitt (230) versehen ist; wobei das Stabilitätssystemmodul (300) angrenzend an den ersten Abdeckungsabschnitt (230) vorgesehen ist.

15. Fahrzeug (100) nach einem der vorhergehenden Ansprüche, wobei das Fahrzeug (100) eine Traktoreinheit (130) zum Schleppen eines Anhängers (132) oder eine Traktoreinheit (130) eines Festbettwagens (134) ist.

## Revendications

1. Véhicule (100), comprenant une première région d'extrémité (102) et une seconde région d'extrémité (104), la première région d'extrémité (102) étant espacée de la seconde région d'extrémité (104) le long d'un axe x du véhicule (100) ; le véhicule (100) s'étendant le long d'un axe y, un premier côté (106) du véhicule (100) et un second côté (108) du véhicule (100) espacés l'un de l'autre le long de l'axe y ; l'axe x étant à angle droit relativement à l'axe y ; et le véhicule (100) s'étendant le long d'un axe z, un côté supérieur (120) du véhicule (100) et un côté inférieur (122) du véhicule (100) espacés l'un de l'autre le long de l'axe z ; l'axe z étant perpendiculaire à l'axe x et à l'axe y ;
le véhicule comprenant un châssis (500) s'étendant le long de l'axe x, une première extrémité (506) du châssis (500) et une seconde extrémité (508) du châssis (500) étant espacées l'une de l'autre le long de l'axe x ;
la première région d'extrémité (102) du véhicule (100) comprenant :
une première unité caisse de carrosserie (200) comprenant une section paroi d'extrémité (202) qui définit une première extrémité (110) du véhicule (100) ;
la première unité caisse de carrosserie (200) définissant en outre un compartiment d'unité motrice (204) ;
un module de système de stabilité (300),
dans lequel le module de système de stabilité (300) comprend une armature de véhicule (600) pour coupler le module de système de stabilité (300) au châssis (500), l'armature de véhicule (600) ayant une section corps (602) qui définit un premier moyeu de support (604) ; et le module de système de stabilité (300) comprend en outre une première jambe de support (400) ayant une première portion d'armature (402) et une première extrémité pied (404) ;
la première jambe de support (400) s'étendant le long de l'axe z depuis la première portion d'armature (402) jusqu'à la première extrémité pied (404) ; et la première portion d'armature (402) étant située à l'intérieur du premier moyeu de support (604) de l'armature de véhicule (600) ;
la première jambe de support (400) étant utilisable pour avoir une configuration chargée dans laquelle la première extrémité pied (404) est en prise avec une surface de support (800) en dessous du véhicule (100) et une configuration non chargée dans laquelle la première extrémité pied (404) est espacée de la surface de support (800) en dessous du véhicule (100), la première jambe de support (400) étant utilisable pour s'étendre en longueur le long de l'axe z depuis la configuration non chargée jusqu'à la configuration chargée ;
**caractérisé en ce que** le module de système de stabilité (300) est monté à l'intérieur du compartiment d'unité motrice (204).

2. Véhicule (100) tel que revendiqué dans la revendication 1, dans lequel la section corps (602) de l'armature de véhicule (600) définit un second moyeu de support (606) espacé du premier moyeu de support (604) le long de l'axe y, et
le module de système de stabilité (300) comprend une seconde jambe de support (1400) ayant une seconde portion d'armature (1402) et une seconde extrémité pied (1404) ; la seconde jambe de support (1400) s'étendant le long de l'axe z depuis la seconde portion d'armature (1402) jusqu'à la seconde extrémité pied (1404) ; et la seconde portion d'armature (1402) étant située à l'intérieur du second moyeu de support (606) de l'armature de véhicule (600),
la seconde jambe de support (1400) étant utilisable pour avoir une configuration chargée dans laquelle la seconde extrémité pied (1404) est en prise avec la surface de support (800) en dessous du véhicule (100) et une configuration non chargée dans laquelle la seconde extrémité pied (1404) est espacée de la surface de support (800) en dessous du véhicule (100), la seconde jambe de support (1400) étant utilisable pour s'étendre en longueur le long de l'axe z depuis la configuration non chargée jusqu'à la configuration chargée.

3. Véhicule (100) tel que revendiqué dans la revendication 1 ou la revendication 2, dans lequel la seconde région d'extrémité (104) du véhicule (100), le module de système de stabilité (300), et la section paroi d'extrémité (202) de la première unité caisse de carrosserie (200) sont prévus en série le long de l'axe x du véhicule (100), le module de système de stabilité (300) étant prévu entre la seconde région d'extrémité (104) et la section paroi d'extrémité (202) de la première unité caisse de carrosserie (200).

4. Véhicule (100) tel que revendiqué dans l'une quelconque des revendications précédentes dans lequel une unité motrice (900) est située dans le compartiment d'unité motrice (204) ; et l'unité motrice (900), l'armature de véhicule (600), et la section paroi d'extrémité (202) de la première unité caisse de carrosserie (200) sont prévues en série le long de l'axe x du véhicule (100), l'armature de véhicule (600) étant prévue entre l'unité motrice (900) et la section paroi d'extrémité (202) de la première unité caisse de carrosserie (200).

5. Véhicule (100) tel que revendiqué dans l'une quelconque des revendications précédentes dans lequel la première région d'extrémité (102) du véhicule (100) comprend en outre :
une seconde unité caisse de carrosserie (220) qui définit une cabine de conducteur (224) ;
la seconde unité caisse de carrosserie (220) étant située au-dessus de la première unité caisse de carrosserie (200) dans l'axe z.

6. Véhicule (100) tel que revendiqué dans l'une quelconque des revendications précédentes dans lequel la première extrémité (506) du châssis (500) comprend un premier rail de châssis (502) qui s'étend le long de l'axe x sur au moins une partie de l'étendue à travers le compartiment d'unité motrice (204) vers la section paroi d'extrémité (202) de manière telle que le premier rail de châssis (502) est situé dans le compartiment d'unité motrice (204), et la section corps (602) de l'armature de véhicule (600) est couplée au premier rail de châssis (502) du châssis (500).

7. Véhicule (100) tel que revendiqué dans la revendication 6, dans lequel la première extrémité (506) du châssis (500) comprend un second rail de châssis (504) qui s'étend le long de l'axe x sur au moins une partie de l'étendue à travers le compartiment d'unité motrice (204) vers la section paroi d'extrémité (202) de manière telle que le second rail de châssis (504) est situé dans le compartiment d'unité motrice (204) ; le second rail de châssis (504) étant espacé du premier rail de châssis (502) dans l'axe y, et la section corps (602) de l'armature de véhicule (600) est couplée au second rail de châssis (504) du châssis (500).

8. Véhicule (100) tel que revendiqué dans l'une quelconque des revendications précédentes dans lequel la section corps (602) de l'armature de véhicule (600) s'étend dans l'axe y du véhicule (100) ; et
une première aile (610) s'étend depuis la section corps (602), la première aile (610) comprenant une première section (612) qui est décalée par rapport à la section corps (602) et qui s'étend dans l'axe y du véhicule (100) ; la première aile (610) étant configurée pour se coupler au premier rail de châssis (502).

9. Véhicule (100) tel que revendiqué dans la revendication 8, dans lequel la section corps (602) de l'armature de véhicule (600) comprend une seconde aile (620) qui s'étend depuis la section corps (602), la seconde aile (620) comprenant une seconde section (622) qui est décalée par rapport à la section corps (602) et qui s'étend dans l'axe y du véhicule (100) ; la seconde aile (620) étant configurée pour se coupler au second rail de châssis (504).

10. Véhicule (100) tel que revendiqué dans l'une quelconque des revendications précédentes dans lequel la première extrémité (506) du châssis (500) comprend en outre un élément de support latéral (700) situé dans le compartiment d'unité motrice (204), l'élément de support latéral (700) s'étendant le long de l'axe y de part et d'autre du compartiment d'unité motrice (204).

11. Véhicule (100) tel que revendiqué dans la revendication 10, dans lequel la section corps (602) de l'armature de véhicule (600) est couplée à l'élément de support latéral (700) du châssis (500).

12. Véhicule (100) tel que revendiqué dans la revendication 11, dans lequel l'armature de véhicule (600) comprend un premier élément d'extension (630) qui s'étend depuis la section corps (602) ; le premier élément d'extension (630) étant couplé à l'élément de support latéral (700) du châssis (500) ; et
l'armature de véhicule (600) comprend un second élément d'extension (632) qui s'étend depuis la section corps (602) ; le second élément d'extension (632) étant couplé à l'élément de support latéral (700) du châssis (500), le second élément d'extension (632) étant espacé du premier élément d'extension (630) dans l'axe y.

13. Véhicule (100) tel que revendiqué dans la revendication 12, dans lequel l'armature de véhicule (600) comprend un premier appui (640) qui s'étend entre le premier élément d'extension (630) et l'élément de support latéral (700) du châssis (500) ; et l'armature de véhicule (600) comprend un second appui (642) qui s'étend entre le second élément d'extension (632) et l'élément de support latéral (700) du châssis (500), le second appui (642) étant espacé du premier appui (640) dans l'axe y.

14. Véhicule (100) tel que revendiqué dans l'une quelconque des revendications précédentes, dans lequel la section paroi d'extrémité (202) est pourvue d'une première section de couvercle (230) ; le module de système de stabilité (300) étant prévu de façon adjacente à la première section de couvercle (230).

15. Véhicule (100) tel que revendiqué dans l'une quelconque des revendications précédentes, dans lequel le véhicule (100) est une unité tracteur (130) pour remorquer une remorque (132) ou une unité tracteur (130) d'un camion à plateau fixe (134).
